# NEUE EUROPÄISCHE PATENTSCHRIFT

(11) **EP 2 047 171 B2**
(45) Veröffentlichungstag und Bekanntmachung des Hinweises auf die Entscheidung über den Einspruch: **29.07.2020**
(45) Hinweis auf die Patenterteilung: 02.03.2011
(21) Anmeldenummer: 08786151.4
(22) Anmeldetag: 15.07.2008
(51) Int. Cl.: F16P 3/10

(54) **VERFAHREN ZUM SCHUTZ VON PERSONEN BEI IHRER ARBEIT AN EINER SERVOPRESSE SOWIE SERVOPRESSE MIT PERSONENSCHUTZEINRICHTUNG**
METHOD FOR PROTECTING PERSONNEL DURING OPERATION OF A SERVO PRESS AND SERVO PRESS COMPRISING A PERSONNEL PROTECTION DEVICE
PROCEDE DESTINE A PROTEGER DES PERSONNES DANS LE CADRE DE LEUR TRAVAIL SUR UNE SERVOPRESSE, ET SERVOPRESSE COMPRENANT UN DISPOSITIF DE PROTECTION DES PERSONNES

(30) Priorität: 19.07.2007 DE 102007033712
(43) Veröffentlichungstag der Anmeldung: 15.04.2009
(73) Patentinhaber: Siemens Aktiengesellschaft, 80333 München (DE)
(72) Erfinder: KÖNIG, Georg, 96155 Buttenheim (DE)
(86) Internationale Anmeldenummer: PCT/EP2008/059242
(87) Internationale Veröffentlichungsnummer: WO 2009/010511

(56) Entgegenhaltungen:
- DE-A1-102005 012 876
- DE-A1-102005 040 263
- GB-A- 638 129
- US-A1- 2005 103 130
- US-B1- 6 283 514

## Beschreibung

Die Erfindung betrifft ein Verfahren zum Schutz von Personen bei ihrer Arbeit an einer elektrisch angetriebenen Servopresse, wobei ein Gefahrenbereich der Servopresse mittels einer diese umgebenden baulichen Schutzvorrichtung mit einer verriegelbaren Zugangsmöglichkeit für Personen absichert ist.

Die Erfindung betrifft weiterhin eine Servopresse mit Personenschutzeinrichtung, wobei die Servopresse einen Pressenstößel, einen Elektromotor zum Antreiben des Pressenstößels, einen elektrischen Antrieb zum Speisen des Elektromotors auf Basis eines vorgegebenen Antriebssollwertes sowie eine die Servopresse umgebende bauliche Schutzvorrichtung mit einer verriegelbaren Zugangsmöglichkeit zur Absicherung eines Gefahrenbereichs der Servopresse aufweist.

Aus ökonomischer Sicht wird bei bekannten Servopressen, die nicht von Hand einer Person bestückt werden, sondern bei denen die Zufuhr maschinell geschieht, auf eine Betriebsbremse verzichtet. Stattdessen wird eine Haltebremse verwendet, und der Bediener der Presse wird durch einen Schutzzaun vom Gefahrenbereich der Presse getrennt. Während die Betriebsbremse technisch dazu ausgelegt ist, die Servopresse im laufenden Betrieb abbremsen zu können, ist die Haltebremse im Wesentlichen dazu ausgelegt, den Pressenstößel als "schwebende Last" halten zu können bzw. diesen bei vergleichsweise sehr kleinen Stößelgeschwindigkeiten, wie z.B. im Bereich von 30 mm/s bis 50 mm/s, abbremsen und halten zu können. Die Betriebsbremse ist folglich im Vergleich zu der Haltebremse erheblich voluminöser, schwerer und teuerer.

Hierbei stellt sich das Problem, bei Betriebsarten, die einen Zugang zur Presse erfordern (z.B. beim Einrichtbetrieb), die Personensicherheit weiterhin zu gewährleisten. Dies kann durch den Schutzzaun natürlich dann nicht mehr sichergestellt werden, wenn die Person sich in den Gefahrenbereich begibt. Hierfür sind dann alternative Sicherungsmaßnahmen erforderlich. Ein gefahrloser Betrieb einer Servopresse mit Haltebremse und offenem Schutzbereich ist derzeit nicht möglich.

In der US 2005/103130 A1 ist beispielsweise ein Verfahren zum Erkennen eines Stillstands eines bewegbaren Objekts bzw. ein entsprechender Test beschrieben.

Der Erfindung liegt daher die Aufgabe zugrunde, ein Verfahren zum Schutz von Personen bei ihrer Arbeit an einer elektrisch angetriebenen Servopresse mit Haltebremse anzugeben, wobei die Personensicherheit bei einer Betriebsart mit Zugang zur Presse, insbesondere bei einem Einrichtbetrieb, weiterhin gewährleistet ist.

Es ist eine weitere Aufgabe der Erfindung, eine geeignete Servopresse mit Personenschutz anzugeben.

Die Aufgabe wird für das Verfahren mit den Merkmalen des Patentanspruchs 1.

Die Aufgabe wird für die Servopresse mit den Merkmalen des Patentanspruchs 2 gelöst. Vorteilhafte Ausführungsformen sind in den abhängigen Patentansprüchen 3 bis 10 angegeben.

Die Erfindung umfasst dabei folgende Aspekte:
Bereichsabsicherung:
   Der Gefahrenbereich der Presse wird, bei Betriebsarten mit maschineller Beschickung, durch einen Schutzzaun und einer Zugangsmöglichkeit mit einer Freigabeeinrichtung, wie z.B. durch eine mechanische Verriegelung einer Schutztür, abgesichert.

Bei Betriebsarten mit Zugang des Bedieners zur Presse, wie z.B. in einem Einrichtbetrieb, erfolgt ein Test der Haltebremse auf Anforderung auf Eintritt in den Gefahrenbereich der Presse. Nach positivem Test wird z.B. eine Zuhaltung der Schutztür, freigegeben. Es wird anstelle einer aufwändigen Betriebsbremse eine Haltebremse vorgesehen, welche die Masse des Pressenstößels als hängende Last der Servopresse und eine bestimmte kinetische Energie des Stößels bremsen kann.

Die kinetische Energie des Pressenstößels wird hierbei überwacht (siehe folgender Abschnitt). Für die aufzunehmende Energie wird vorzugsweise die maximale potentielle Energie des gewichtsmäßig unausgeglichenen Pressenstößels in seiner oberen Endlage angenommen. Mit unausgeglichenem Pressenstößelgewicht ist dasjenige Gewicht gemeint, welches der Pressenstößel bei einer Loslösung aus einer den Pressenstößel antreibenden Exzenterscheibe, wie z.B. bei einem Bruch der Stößelaufhängung, aufweist. In diesem Fall wirkt eine entsprechende Gewichtskompensation des Pressenstößels, welche diesen sozusagen leichter machen würde, nicht mehr.

Zu der potentiellen Energie kommt eine gewisse kinetische Energie dazu, welche der sich bewegende Pressenstößel samt vorgeschaltetem Antriebs- und Getriebestrang bei einer bestimmten Geschwindigkeit aufweist. Vorzugsweise wird als maximal zulässige Geschwindigkeit eine Geschwindigkeit angenommen, die etwas größer ist als eine Einrichtgeschwindigkeit zum manuellen Einrichten der Presse. Hierzu ist für einen Bediener der Servopresse vorgesehen, dass er in einem Einrichtbetrieb z.B. mittels Steuertasten den Pressenstößel manuell verfahren kann. Typischerweise liegt diese Einrichtgeschwindigkeit bei weniger als 50 mm/s, wie z.B. bei 30 mm/s. Sie beträgt somit im Vergleich zur Betriebsgeschwindigkeit mit bis zu mehreren Metern pro Sekunde nur einen Bruchteil davon.

Auf die Summe aus potentieller und kinetischer Energie kommt üblicherweise ein Sicherheitszuschlag dazu, wie z.B. in Höhe von 50%.

Hinsichtlich der Bremskraft erfolgt die Auslegung der Haltebremse derart, dass der Pressenstößel unter allen Umständen in einem Fehlerfall seinen unteren Totpunkt nicht erreicht. Unter Umständen könnte sich dort der Bediener der Servopresse Verletzungen wie Fingerquetschungen zuziehen.

Ein Test auf korrekte Funktionsweise findet auf genannte Anforderung auf Eintritt in den Gefahrenbereich statt.

Um die kinetische Energie des Pressenstößels bei Betriebsarten mit Zugang zur Presse auf einen maximalen Wert zu überwachen, wird die Stößelgeschwindigkeit auf einen zulässigen Wert überwacht. Bei einer Überschreitung wird gemäß folgendem Abschnitt eine Momentenfreischaltung durchgeführt und der Stößel durch die Haltebremse zum Stillstand gebracht.

Die Haltebremse ist, wie zuvor beschrieben, in der Lage, eine definierte kinetische Energie des Pressenstößels und die Stößelmasse selbst zu halten bzw. zu bremsen. Eine zusätzliche Energie, die über ein eventuelles Moment des Antriebes bzw. Motors an den Stößel abgegeben würde, würde die Haltebremse kräfte- und energiemäßig überlasten. Deshalb ist zum Erreichen ein größtmögliches Maß an Sicherheit (z.B. Kategorie 4 nach DIN EN 954) eine Momentenfreischaltung des Antriebs erforderlich.

Für die Servopresse ist nun eine Haltebremse vorgesehen, welche zum Abbremsen eines Pressenstößels plus einer kinetischen Energie des Pressenstößels bei einem manuellen Einrichtbetrieb ausgelegt ist. Es wird eine Anforderung zum Eintritt in den Gefahrenbereich abgefragt, wobei die Haltebremse auf ihre Funktion getestet wird, und wobei die Zugangsmöglichkeit bei einem positiven Haltebremsentest freigegeben wird.

Mit anderen Worten wird der Gefahrenbereich für einen Bediener der Servopresse erst dann freigegeben, wenn die Funktionsfähigkeit der Haltebremse gewährleistet ist. Dadurch kann ein Bediener Einrichtarbeiten direkt im Gefahrenbereich der Servopresse vornehmen. Derart kann eine ökonomische Haltebremse anstatt einer aufwändigen und teueren Betriebsbremse verwendet werden.

Durch die Bereichsabsicherung sind verschiedene Betriebsmodi der Presse möglich, wie z.B. ein betrieblicher Produktionsmodus oder ein Einrichtbetrieb. Weiterhin stellt sie eine mechanische Absicherung einer Person in Bezug auf die potentielle Gefahrenstelle dar. Nach einer Verfahrensvariante wird der elektrische Antrieb bei einem negativen Haltebremsentest freigeschaltet. Dadurch wird vorteilhaft ein Weiterbetrieb der Servopresse wirksam unterbunden.

Nach dem Verfahren wird nach Freigabe der Zugangsmöglichkeit die Stößelgeschwindigkeit des Pressenstößels auf eine für den Einrichtbetrieb maximale zulässige Geschwindigkeit überwacht. Es wird bei Überschreitung der Stößelgeschwindigkeit dann der Antrieb freigeschaltet und die Haltebremse zum Abbremsen des Pressenstößels angesteuert.

Durch die nach Freigabe der Zugangsmöglichkeit ständige Überwachung der Stößelgeschwindigkeit wird der Fehlerfall überwacht, dass der Antrieb für den Einrichtbetrieb, aus welchen Gründen auch immer, einen überhöhten Antriebssollwert erhält. Die damit verbundene Zunahme der Stößelgeschwindigkeit würde dazu führen, dass ein rechtzeitiges Abbremsen des Pressenstößels durch die hierfür nicht ausgelegte Haltebremse nicht mehr rechtzeitig bzw. überhaupt nicht mehr möglich ist.

Einer weiteren Verfahrensvariante zur Folge wird zum Testen der Haltebremse eine Endstellung des Pressenstößels angefahren. Vorzugsweise ist diese Endstellung der obere Totpunkt des über einen Exzenter angetriebenen Pressenstößels. In dieser Position ist der Pressenstempel am unteren ende des Pressenstößels frei, um dort gegebenenfalls neue Werkstücke durch den Bediener einlegen zu können. Die Endstellung kann z.B. durch einen reduzierten Antriebssollwert bzw. Bremssollwert für den Antrieb erreicht werden. Es kann als Antriebssollwert für diesen Fall auch der Wert "0" ausgegeben werden, so dass die Servopresse ausläuft, wobei gegen Ende des Auslaufens gezielt abgebremst werden kann, um die Endstellung zu erreichen. Zur Erfassung der Endstellung wird ein mit dem Pressenstößel bzw. mit dem Antrieb verbundener Drehgeber bzw. Positionsgeber ausgewertet.

Es wird nun ein reduzierter Antriebstestsollwert zum Anfahren des Pressenstößels gegen die Haltebremse aufgeschaltet. Mit Antriebstestsollwert ist gemeint, dass nur eine vergleichsweise kleine Antriebskraft bzw. ein vergleichsweise kleines Antriebsdrehmoment durch den Antrieb über den zumindest einen Elektromotor aufgebracht wird, wobei die resultierende Kraft bzw. das resultierende Drehmoment derart bemessen ist, dass die Bremskraft der (ordnungsgemäßen) Haltebremse nicht überwunden werden kann. Es wird nun eine aktuelle Stößelposition überwacht und bei einer Veränderung der Stößelposition der Antrieb freigeschaltet. Mit anderen Worten wir bei einer Veränderung der Stößelposition eine nicht mehr ausreichende Brems- bzw. Haltekraft der Haltebremse erkannt. Ein sicherer Betrieb der Servopresse ist in einem solchen Fall nicht mehr gewährleistet.

Das beschriebene Verfahren ist bei einer Servopresse mit Personenschutzeinrichtung einsetzbar. Die Servopresse weist einen Pressenstößel, einen Elektromotor zum Antreiben des Pressenstößels, einen elektrischen Antrieb zum Speisen des Elektromotors auf Basis eines vorgegebenen Antriebssollwertes sowie eine die Servopresse umgebende bauliche Schutzvorrichtung mit einer verriegelbaren Zugangsmöglichkeit zur Absicherung eines Gefahrenbereichs der Servopresse auf. Anstelle eines Elektromotors können auch mehrere, insbesondere parallel geschaltete Elektromotoren zum Antrieb verwendet werden. Der Elektromotor kann z.B. über ein mechanisches Getriebe mit einer Exzenterscheibe verbunden sein, über welche der Pressenstößel angetrieben wird. Alternativ kann es sich bei dem Elektromotor um einen Linearmotor handeln, welcher den Pressenstößel wiederholt nach oben und nach unten verfährt.

Es ist eine Haltebremse vorgesehen, die zum Abbremsen der Masse des Pressenstößels plus einer kinetischen Energie des Pressenstößels ausgelegt ist. Weiterhin ist eine Bremsentesteinrichtung zum Testen der Haltebremse auf Anforderung zum Eintritt in den Gefahrenbereich vorhanden. Es ist weiterhin eine Freigabeeinrichtung zum Freigeben der Zugangsmöglichkeit bei einem positiven Haltebremsentest vorhanden. Schließlich weist die Servopresse eine Momentenfreischaltung zum Freischalten des elektrischen Antriebs und eine Überwachungseinrichtung zur Überwachung einer Stößelgeschwindigkeit auf Überschreitung einer zulässigen Geschwindigkeit und zum Ansteuern der Momentenfreischaltung und der Haltebremse auf, falls bei freigegebener Zugangsmöglichkeit die zulässige Geschwindigkeit überschritten wird.

Nach einer Ausführungsform ist die maximal zulässige Geschwindigkeit auf eine reduzierte Einrichtgeschwindigkeit bei freigegebener Zugangsmöglichkeit bezogen, insbesondere auf eine Geschwindigkeit für Einrichtarbeiten an der Servopresse.

Nach einer weiteren Ausführungsform ist die Momentenfreischaltung über einen ersten und zweiten Abschaltpfad im Antrieb realisiert. Durch den doppelten Abschaltpfad wird verhindert, dass bei Ausfall eines der beiden Abschaltpfade der Antrieb weiterläuft und nicht gestoppt werden kann. Die beiden Abschaltpfade können bereits in einem elektrischen Antrieb, insbesondere in einen Umrichter, integriert sein. Ein derartiger Umrichter kann z.B. ein Umrichter des Typs SINAMICS von der Firma Siemens sein, welcher bereits die Sicherheitsstufe der Kategorie 3 gemäß der europäischen Norm DIN EN 954 erfüllt.

Um eine Sicherheitsstufe der Kategorie 4 für einen noch sichereren Betrieb zu erreichen, ist die Momentenfreischaltung zum Freischalten des elektrischen Antriebs zusätzlich über ein Motorschütz als dritten Abschaltpfad zur Abtrennung des elektrischen Antriebs von einer Energieversorgung realisiert.

Nach einer Ausführungsform weist die Bremsentesteinrichtung Mittel zum Anfahren einer Endstellung des Pressenstößels auf Anforderung zum Eintritt in den Gefahrenbereich, Mittel zum Ansteuerung der Haltebremse, Mittel zum Aufschalten eines Antriebstestsollwertes, Mittel zur Erfassung der Stößelposition des Pressenstößels und Mittel zur Ansteuerung der Momentenfreischaltung auf, falls eine Veränderung der Stößelposition bei aufgeschaltetem Antrieb detektierbar ist.

Zur sicheren Erkennung, dass der Antrieb eingeschaltet und auch ein entsprechendes Antriebsdrehmoment zum Testen der Haltebremse aufbringt, weist die Bremsentesteinrichtung Mittel zur Fassung eines Motorstroms auf. Ist wider Erwarten kein Motorstrom detektierbar, so erfolgt die Ansteuerung der Momentenfreischaltung. Die Motorstromerfassung erfolgt typischerweise mittels eines sogenannten Stromwandlers oder Motorstromwandlers.

Im Besonderen weist die Momentenfreischaltung zum Freischalten des elektrischen Antriebs eine Sicherheitsstufe mindestens der Kategorie 4 nach der Norm DIN EN 954 auf. Dadurch wird hinsichtlich des Personenschutzes ein extrem hohes Sicherheitsmaß erfüllt.

Nach einer weiteren Ausführungsform der Servopresse erfolgen die Erfassung einer Pressenstößelposition und/oder die Erfassung des Zustands der Freigabeeinrichtung zumindest zweikanalig.

Schließlich sind zumindest Teile der Funktion der Bremsentesteinrichtung, der Freigabeeinrichtung, der Momentenfreischaltung und der Überwachungseinrichtung in einer elektronischen Steuerung, insbesondere in einer fehlersicheren elektronischen Steuerung mit zweikanalig ausgeführten Ein- und Ausgängen, zusammengefasst. Eine solche Steuerung kann eine SPS (für Speicher programmierbare Steuerung) vom Typ SIMATIC der Fa. Siemens sein. Typischerweise weist eine derartige "SPS" eine sogenannte F-CPU für einen fehlersicheren Betrieb auf. Hierzu kann die SPS zwei oder mehrere CPUs aufweisen.

Die Erfindung sowie vorteilhafte Ausführungsformen der Erfindung sind nachfolgend am Beispiel von Figuren erläutert. Dabei zeigen:
- FIG 1: eine Servopresse mit einer Personenschutzeinrich- tung nach dem Stand der Technik,
- FIG 2: beispielhaft eine Ablauffolge für den Zugang eines Bedieners zu einer Servopresse entsprechend dem er- findungsgemäßen Verfahren,
- FIG 3: beispielhaft eine Ablauffolge zur fortlaufenden Überwachung der Stößelgeschwindigkeit entsprechend dem erfindungsgemäßen Verfahren,
- FIG 4: eine schematische Darstellung des Teilaspekts "Be- reichsabsicherung",
- FIG 5: eine schematische Darstellung des Teilaspekts "Hal- tebremse",
- FIG 6: eine schematische Darstellung des Teilaspekts "Überwachung der kinetischen Energie des Pressen- stößels",
- FIG 7: eine schematische Darstellung des Teilaspekts "Mo- mentenfreischaltung" und
- FIG 8: eine schematische Darstellung des Gesamtkonzepts.

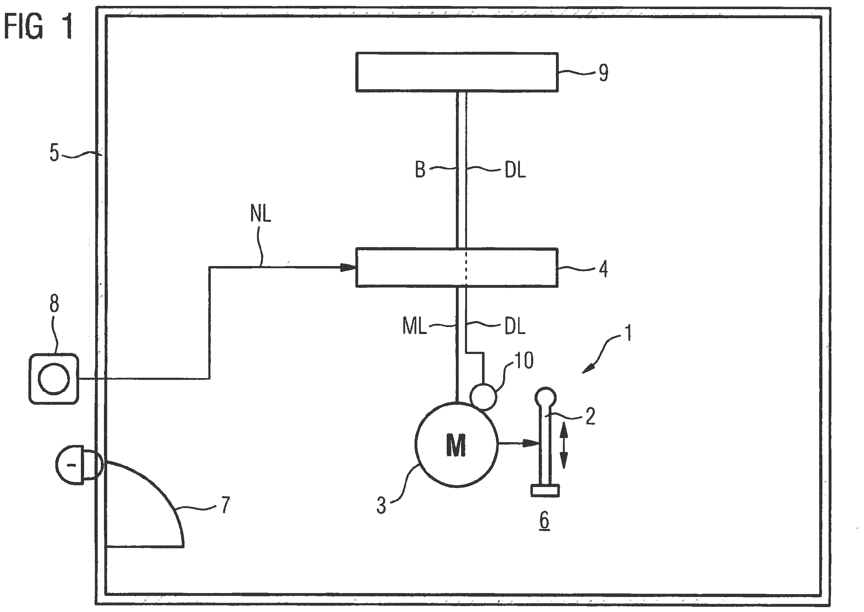

FIG 1 zeigt eine Servopresse 1 mit einer Personenschutzeinrichtung nach dem Stand der Technik. Die gezeigte Servopresse 1 ist nur schematisch dargestellt. Sie weist einen Elektromotor 3 zum Antreiben eines Pressenstößels 2 auf. Die Bewegung des Pressenstößels 2 ist durch einen Pfeil nach oben und unten gekennzeichnet. Mit dem Bezugszeichen 6 ist ein Gefahrenbereich der Servopresse 1 bezeichnet. Insbesondere handelt es sich bei diesem Bereich um den Bereich unterhalb des Pressenstempels des Pressenstößels 2. Mit dem Bezugszeichen 10 ist ein Drehgeber dargestellt, welcher beispielhaft in Verbindung mit dem Elektromotor 3 zur Erfassung der Drehbewegung steht. Alternativ kann der Drehgeber 10 mit einem zwischen dem Elektromotor 3 und dem Pressenstößel 2 angeordneten mechanischen Getriebe bzw. einer dort angeordneten Exzenterscheibe verbunden sein. Mit DL ist eine entsprechende Drehgebersignalleitung bezeichnet. Mit dem Bezugszeichen ML sind die Motorleitungen bezeichnet. Die gesamte Servopresse 1 ist von einem Schutzzaun 5 zur Absicherung von Personen gegenüber dem eingeschlossenen Gefahrenbereich 6 abgetrennt. Im Schutzzaun 5 ist eine verschließbare Schutztür 7 als Zugangsmöglichkeit vorgesehen, symbolisiert durch ein Schloss. Die Zugangsmöglichkeit kann alternativ ein Tor, ein Drehkreuz, eine Schranke oder ähnliches sein. Im Normalbetrieb der Servopresse 1, wie z.B. bei einer Fertigung, kann eine Person nicht in diesen Gefahrenbereich 6 gelangen. Um gegebenenfalls Einrichtarbeiten an der Servopresse 1 vornehmen zu können, kann die Servopresse 1 z.B. über einen von außen zugänglichen Not-Aus-Schalter 8 abgeschaltet und die Schutztür 7 aufgesperrt werden. Bei Betätigung des Not-Aus-Schalters 8 wird ein elektrischer Antrieb 4 zur elektrischen Speisung des Elektromotors 3 abgeschaltet. Mit NL ist eine zugehörige Not-Aus-Verbindungsleitung, welche den Not-Aus-Schalter 8 mit dem elektrischen Antrieb 4 verbindet, bezeichnet. Zur Ansteuerung ist weiterhin ein Antriebssteuergerät 9, insbesondere eine sogenannte "Motion Control", vorhanden. Mit B ist ein beispielhafter Kommunikationsbus bezeichnet, über welchen das Antriebssteuergerät 9 unter anderem einen Antriebssollwert zum elektrischen Antrieb 4 übertragen kann. Das Antriebssteuergerät 9 erfasst zur Steuerung und zur Regelung des elektrischen Antriebs 4 zudem die über die Drehgebersignalleitung DL übertragenen Drehgebersignale.

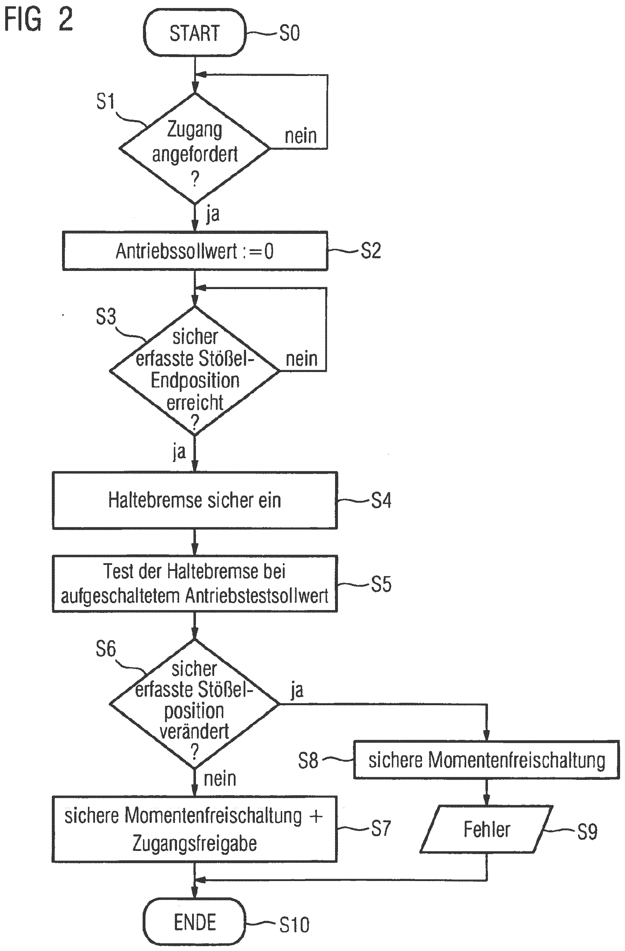

FIG 2 zeigt beispielhaft eine Ablauffolge für den Zugang eines Bedieners zu einer Servopresse 1 gemäß dem erfindungsgemäßen Verfahren. Mit S0 ist ein Startschritt der Ablauffolge bezeichnet. Im Schritt S1 wird eine Anforderung zum Eintritt in den Gefahrenbereich 6 der Servopresse 1 abgefragt. Liegt eine Anforderung vor, so wird im darauffolgenden Schritt S2 zum Anfahren einer Endstellung des Pressenstößels 2 der Servopresse 1 ein Antriebssollwert auf den Wert "0" gesetzt. Mit anderen Worten läuft die Servopresse 1 aus, bis diese Endstellung erreicht ist. Gegebenenfalls oder alternativ kann der Antriebssollwert negativ sein, um den Pressenstößel 2 bis zum Erreichen dieser Endstellung gezielt abzubremsen. Im Schritt S3 wird abgefragt, ob diese Endposition erreicht wurde. Ist dies der Fall, so wird im darauffolgenden Schritt S4 eine Haltebremse zum Halten der Servopresse eingeschaltet. Anschließend wird im Schritt S5 die Haltebremse bei aufgeschaltetem Antriebstestsollwert getestet. Der Antriebstestsollwert ist dabei so ausgelegt, dass ein dadurch hervorgerufenes Antriebsdrehmoment ein wirkendes Bremsmoment der Haltebremse nicht überwinden kann. Anschließend wird im Schritt S6 überprüft, ob sich die aktuelle Stößelposition verändert hat. Ist dies nicht der Fall, so erfolgt eine sichere Momentenfreischaltung und eine Zugangsfreigabe eines Bedieners zu der Servopresse. Mit dem Schritt S10 ist das Ende der Ablauffolge bezeichnet. Hat sich dagegen die Stößelposition verändert, so wird zu einem Schritt S8 verzweigt und wiederum eine sichere Momentenfreischaltung bewirkt. Im Schritt S9 erfolgt gegebenenfalls eine Fehlerausgabe, um einen Bediener oder dem Überwachungspersonal anzuzeigen, dass die Servopresse für Einrichtarbeiten nicht mehr zugänglich gemacht werden darf.

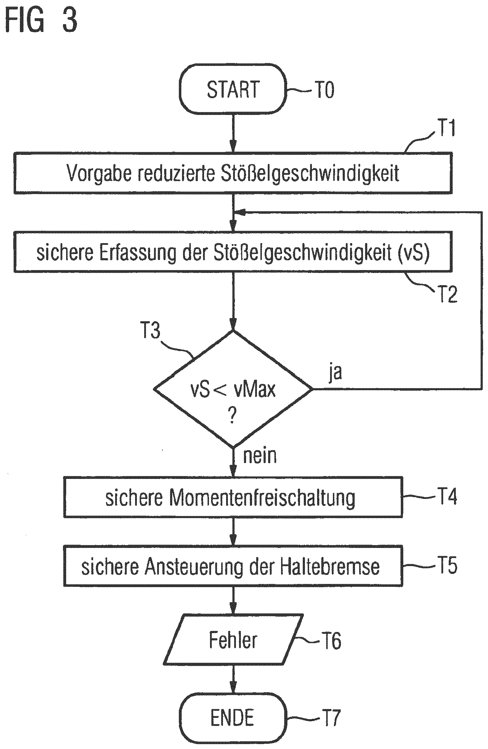

FIG 3 zeigt eine beispielhafte Ablauffolge zur Überwachung der kinetischen Energie eines Pressenstößels bei Freigabe des Gefahrenbereichs entsprechend dem erfindungsgemäßen Verfahren. Mit T0 ist ein Startschritt der Ablauffolge bezeichnet. Im Schritt T1 wird eine reduzierte Stößelgeschwindigkeit vorgegeben. Diese kann z.B. eine für den Einrichtbetrieb vorgesehene, reduzierte Einrichtstößelgeschwindigkeit mit Geschwindigkeitswerten in einem Bereich von 30 mm/s bis 50 mm/s sein. Im nachfolgenden Schritt T2 wird die Stößelgeschwindigkeit vS sicher erfasst. Ein dazu erfasster Wert wird im Schritt T3 mit einem maximal zulässigen Geschwindigkeitswert vMax verglichen. Dieser Wert vMax ist so bemessen, dass die Haltebremse den Pressenstößel noch sicher abbremsen kann, bevor der Pressenstößel seinen unteren Totpunkt erreichen kann. Für den Fall, dass die erfasste Stößelgeschwindigkeit vS kleiner ist als diese zusätzliche maximale Geschwindigkeit vMax, wird zum Schritt T2 zurückverzweigt. Anderenfalls erfolgt im Schritt T4 eine sichere Momentenfreischaltung. Mit anderen Worten wird der elektrische Antrieb für die Servopresse freigeschaltet, bevor aufgrund eines technischen Fehlers sich die Stößelgeschwindigkeit vS derart erhöhen kann, dass keine sichere Abbremsung des Pressenstößels mittels der Haltebremse mehr möglich ist. Zugleich wird im darauffolgenden Schritt T5 die Haltebremse sicher angesteuert und dadurch der Pressenstößel sicher zum Stillstand gebracht. Anschließend erfolgt im Schritt T6 eine Fehlerausgabe, um den Überwachungspersonal bzw. dem Bediener das fehlerhafte und nicht mehr zulässige Verhalten der Servopresse anzuzeigen. Mit T7 ist das Ende der Ablauffolge gemäß FIG 3 bezeichnet.

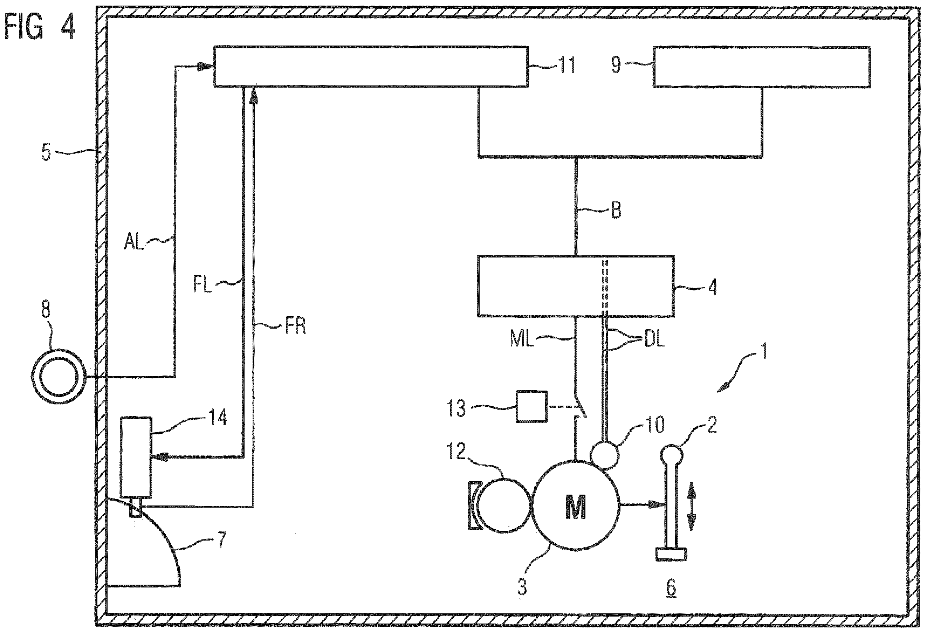

FIG 4 zeigt eine schematische Darstellung des Teilaspekts "Bereichsabsicherung" der Erfindung. Zur Erfassung einer Anforderung auf Zugang in den Gefahrenbereich 6 der Servopresse 1 ist wiederum eine Schutztür 7 als Zugangsmöglichkeit zur Absicherung des Gefahrenbereichs 6 vorhanden. Die Schutztür 7 ist Teil einer die Servopresse 1 umgebenden baulichen Schutzvorrichtung 5. Die Schutzvorrichtung 5 kann z.B. ein Zaun oder eine Wand sein. Die Schutztür 7 weist eine Zuhaltung 14 zum Zuhalten dieser auf. Diese Zuhaltung 14 ist über eine Steuerung 11, insbesondere über eine fehlersichere Steuerung, freigebbar. Mit dem Bezugszeichen FL ist eine Freigabeleitung bezeichnet, mit FR eine Freigaberückmeldeleitung bezeichnet. Die im Beispiel der FIG 4 gezeigte Steuerung 11 ist dazu ausgebildet, sicher die Funktionalität der gezeigten Freigabeeinrichtung auszuführen. Hierzu weist die Steuerung 11 vorzugsweise redundant, d.h. zweikanalig, ausgeführte Signaleingänge und/oder Signalausgänge auf. Dadurch kann nach Aufforderung für einen Zugang zum Gefahrenbereich 6 über ein Drücken des gezeigten Schalters bzw. Tasters 8 die Zuhaltung 14 zum Öffnen der Schutztür 7 freigegeben werden. Mit AL ist eine Anforderungsleitung AL bezeichnet, über welche der Steuerung 11 eine Anforderung auf Zugang signalisiert wird. Über eine Freigabeleitung FR wird der Steuerung 11 zurückgemeldet, dass die Schutztür 7 sicher freigegeben ist. Die gezeigte Freigabeeinrichtung erfüllt vorzugsweise die Kategorie 3 des Sicherheitsstandards gemäß der Norm DIN EN 954.

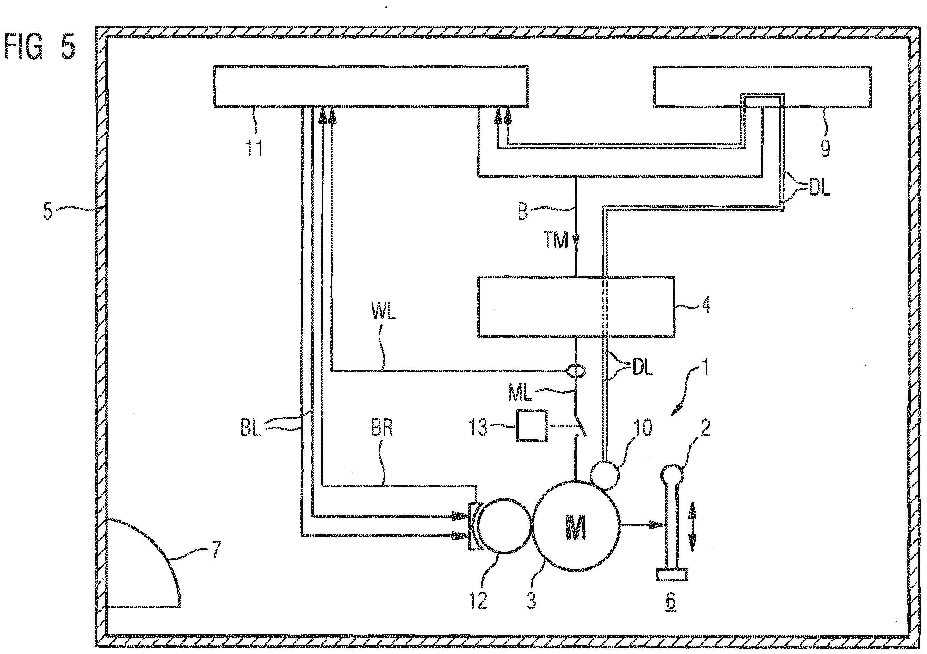

FIG 5 zeigt eine schematische Darstellung des Teilaspekts "Haltebremse". Die gezeigte Haltebremse 12 wirkt beispielhaft direkt zum Bremsen bzw. zum Halten auf den Elektromotor 3 ein. Sie kann alternativ mit einem mechanischen Getriebe oder mit einer Exzenterscheibe der Servopresse 1 verbunden sein. Zur Erfüllung der Kategorie 3 der zuvor genannten Norm erfolgt die Ansteuerung der Haltebremse 12 mittels der Steuerung 11 über zwei Bremsansteuerleitungen BL. Mit BR ist eine entsprechende Bremsrückmeldeleitung bezeichnet. Zum Testen der Haltebremse 12 gibt die Steuerung 11 einen Antriebstestsollwert TM über den Kommunikationsbus B an den elektrischen Antrieb 4 aus. Dieser setzt den Antriebstestsollwert TM in einen entsprechenden, beispielhaft dreiphasigen, Motorstrom zur Speisung des nachgeschalteten Elektromotors 3 um. Zur Sicherstellung, dass der Elektromotor 3 auch tatsächlich elektrisch gespeist wird, ist ein nicht weiter bezeichneter Stromwandler vorgesehen. Mit WL ist eine entsprechende Wandlerleitung bezeichnet, die auf die Steuerung 11 zurückgeführt ist. Für den Fall, dass trotz ausgegebenem Antriebstestsollwert TM kein Strom erfassbar sein sollte, gibt die Steuerung 11 eine entsprechende Fehlermeldung aus. Zugleich erfolgt eine sichere Momentenfreischaltung des elektrischen Antriebs 4.

Für den Fall, dass ein Motorstrom vorliegt, überprüft die Steuerung 11 weiter, ob sich die aktuelle Position des Pressenstößel 2 verändert hat. Dies erfolgt über eine zweikanalige Auswertung der Drehgebersignale des Drehgebers 10. Im Beispiel der vorliegenden FIG 5 sind die zugehörigen Drehgeberleitungen DL durch den elektrischen Antrieb 4 und weiterhin durch das Antriebssteuergerät 9 zur Steuerung 11 durchgeschleift. Mit dem Bezugszeichen 13 ist ein Motorschütz bezeichnet, über welches die Motorleitungen ML zur Speisung des Elektromotors 3 getrennt werden können.

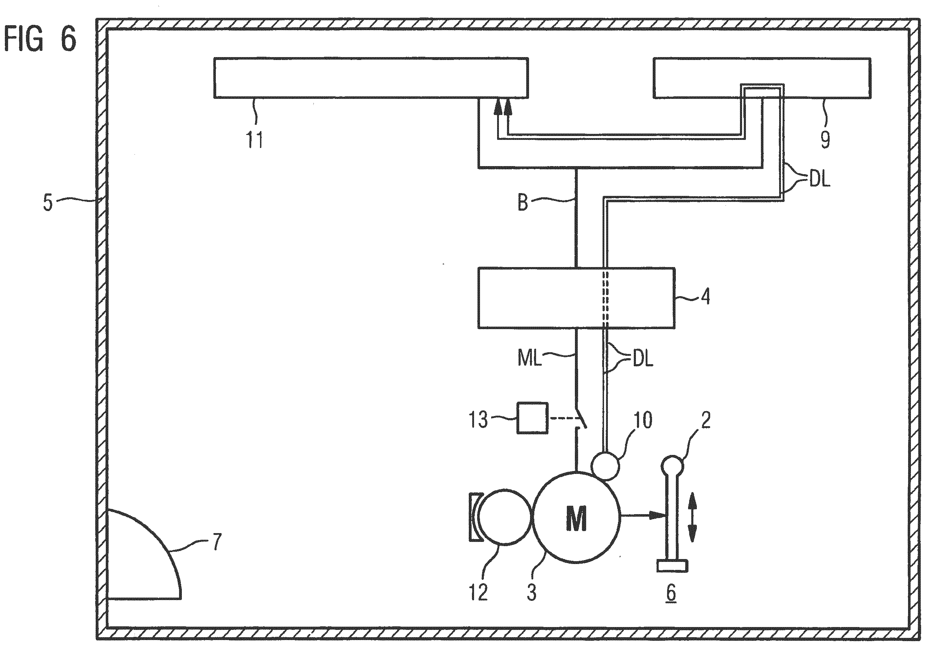

FIG 6 zeigt eine schematische Darstellung des Teilaspekts "Überwachung der kinetischen Energie". Hierzu werden wiederum die Drehgebersignale über die beiden Drehgebersignalleitungen DL zweikanalig durch die Steuerung 11 erfasst. Die Steuerung 11 kann hierzu ein sicherheitsbezogenes Softwaremodul aufweisen, welches fortlaufend eine korrespondierende Stößelgeschwindigkeit des Pressenstößels 2 rechnerisch ermittelt. Durch die zweikanalige Ausführung ist eine sichere Erfassung der Drehgebersignale entsprechend der Kategorie 3 der zuvor genannten Sicherheitsnorm möglich. Bei dem Drehgeber 10 handelt es sich hier um einen zweikanaligen analogen Drehgeber.

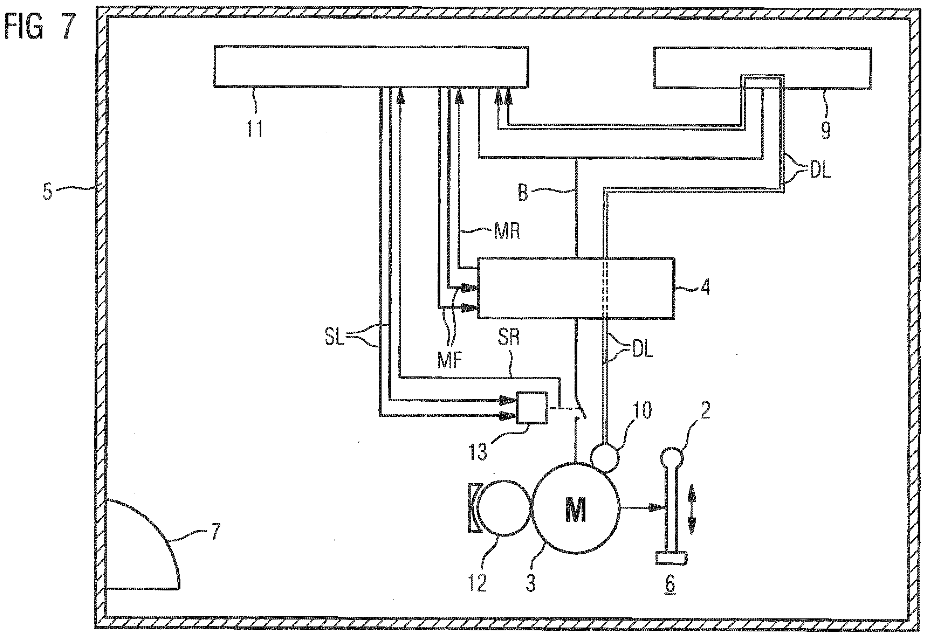

FIG 7 zeigt eine schematische Darstellung des Teilaspekts "Momentenfreischaltung". Um eine Momentenfreischaltung gemäß der Kategorie 3 der zur vorgenannten Norm zu bewerkstelligen, ist eine zweikanalige Momentenfreischaltung des elektrischen Antriebs 4 über die beiden Momentenfreischaltleitungen MF vorgesehen. Mit MR ist eine entsprechende Rückmeldeleitung bezeichnet. Bei dem elektrischen Antrieb 4 handelt es sich vorzugsweise um einen Antrieb bzw. Umrichter, welcher bereits die Sicherheitsanforderung an die Kategorie 3 erfüllt, wie z.B. ein Umrichter vom Typ SINAMICS der Fa. Siemens.

Um eine Erfüllung des Sicherheitsstandards gemäß der Kategorie 4 zu erfüllen, ist zusätzlich als dritter Abschaltpfad das Motorschütz 13 vorgesehen. Dieses kann gleichfalls über zwei Schützansteuerleitungen SL, d.h. wiederum zweikanalig, durch die Steuerung 11 angesteuert werden. Eine entsprechende Schützrückmeldeleitung SR signalisiert der Steuerung 11, dass die Kontakte des Motorschützes zum Unterbrechen des Motorstroms geöffnet worden sind. Typischerweise erfolgt diese über einen zwangsgeführten Hilfskontakt des Motorschützes 13. Die gezeigte Momentenfreischaltung gemäß der Kategorie 4 ermöglicht eine Momentenfreischaltung auf einem äußerst hohen Sicherheitsniveau. Dadurch sind Einrichtarbeiten für Bediener an einer solchen Servopresse 1 ohne weitere Auflagen möglich.

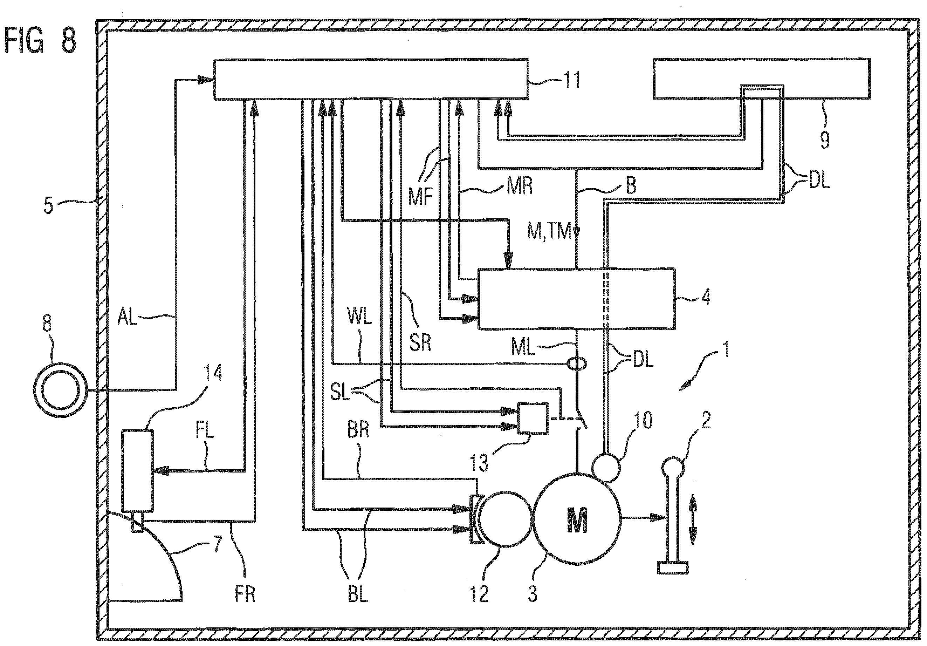

FIG 8 zeigt schließlich in einer schematischen Darstellung des Gesamtkonzepts für eine Personenschutzeinrichtung für Arbeiten an einer Servopresse 1. Ein Großteil der Sicherheits- und Überwachungsfunktionen wird dabei durch die für einen fehlersicheren Betrieb ausgelegte Steuerung 11 übernommen.

## Patentansprüche

1. Verfahren zum Schutz von Personen bei ihrer Arbeit an einer elektrisch angetriebenen Servopresse (1), wobei ein Gefahrenbereich (6) der Servopresse (1) mittels einer diese umgebenden baulichen Schutzvorrichtung (5) mit einer verriegelbaren Zugangsmöglichkeit (7) absichert ist und wobei eine Haltebremse (8) für die Servopresse (1) vorgesehen ist, welche zum Abbremsen eines Pressenstößels (2) plus einer kinetischen Energie des Pressenstößels (2) bei einem manuellen Einrichtbetrieb ausgelegt ist, wobei eine Anforderung zum Eintritt in den Gefahrenbereich (6) abgefragt wird, wobei die Haltebremse (8) auf ihre Funktion getestet wird und wobei die Zugangsmöglichkeit (7) bei einem positiven Haltebremsentest freigegeben wird, **dadurch gekennzeichnet, dass** nach Freigabe der Zugangsmöglichkeit (7) die Stößelgeschwindigkeit (vS) des Pressenstößels (2) auf eine für den Einrichtbetrieb maximal zulässige Geschwindigkeit (vMax) überwacht wird und wobei bei Überschreitung der Stößelgeschwindigkeit (vS) dann der Antrieb (4) freigeschaltet und anschließend die Haltebremse (8) zum Abbremsen des Pressenstößels (2) angesteuert wird.

2. Servopresse mit Personenschutzeinrichtung, wobei die Servopresse einen Pressenstößel (2), einen Elektromotor (3) zum Antreiben des Pressenstößels (2), einen elektrischen Antrieb (4) zum Speisen des Elektromotors (3) auf Basis eines vorgegebenen Antriebssollwertes, eine die Servopresse umgebende bauliche Schutzvorrichtung (5) mit einer verriegelbaren Zugangsmöglichkeit (7) für Personen zur Absicherung eines Gefahrenbereichs (6) der Servopresse sowie eine Bremsentesteinrichtung zum Testen der Haltebremse (8) auf Anforderung zum Eintritt in den Gefahrenbereich (6), eine Haltebremse (8), ausgelegt zum Abbremsen der Masse des Pressenstößels (2) plus einer kinetischen Energie des Pressenstößels (2), aufweist, **gekennzeichnet durch**
- eine Freigabeeinrichtung zum Freigeben der Zugangsmöglichkeit (7) bei einem positiven Haltebremsentest,
- eine Momentenfreischaltung zum Freischalten des elektrischen Antriebs (4) und
- eine Überwachungseinrichtung zur Überwachung einer Stößelgeschwindigkeit (vS) auf Überschreitung einer zulässigen Geschwindigkeit (vMax) sowie zum Ansteuern der Momentenfreischaltung und zum anschließenden Ansteuern der Haltebremse (8), falls bei freigegebener Zugangsmöglichkeit (7) die zulässige Geschwindigkeit (vMax) überschritten wird.

3. Servopresse nach Anspruch 2, **dadurch gekennzeichnet, dass** die maximal zulässige Geschwindigkeit (vMax) auf eine reduzierte Einrichtgeschwindigkeit für Einrichtarbeiten an der Servopresse bei freigegebener Zugangsmöglichkeit (7) bezogen ist.

4. Servopresse nach Anspruch 2 oder 3, **dadurch gekennzeichnet, dass** die Momentenfreischaltung über einen ersten und zweiten Abschaltpfad im Antrieb (4) realisiert ist.

5. Servopresse nach Anspruch 4, **dadurch gekennzeichnet, dass** die Momentenfreischaltung zum Freischalten des elektrischen Antriebs (4) zusätzlich über einen Motorschütz (13) als dritten Abschaltpfad zur Abtrennung des elektrischen Antriebs (4) von einer Energieversorgung realisiert ist.

6. Servopresse nach einem der Ansprüche 2 bis 5, **dadurch gekennzeichnet, dass** die Bremsentesteinrichtung Mittel zum Anfahren einer Endstellung des Pressenstößels (2) auf Anforderung zum Eintritt in den Gefahrenbereich (6), Mittel zum Ansteuern der Haltebremse (8), Mittel zum Aufschalten eines Antriebstestsollwertes (TM), Mittel zur Erfassung der Stößelposition des Pressenstößels (2) und Mittel zur Ansteuerung der Momentenfreischaltung aufweist, falls eine Veränderung der Stößelposition bei aufgeschaltetem Antrieb (4) detektierbar ist.

7. Servopresse nach Anspruch 6, **dadurch gekennzeichnet, dass** die Bremsentesteinrichtung Mittel zur Erfassung eines Motorstroms aufweist und dass die Momentenfreischaltung ansteuerbar ist, falls bei aufgeschaltetem Antrieb (4) kein Motorstrom detektierbar ist.

8. Servopresse nach einem der Ansprüche 2 bis 7, **dadurch gekennzeichnet, dass** die Momentenfreischaltung zum Freischalten des elektrischen Antriebs (4) eine Sicherheitsstufe mindestens der Kategorie 4 nach der Norm DIN EN 954 aufweist.

9. Servopresse nach einem der Ansprüche 2 bis 8, **dadurch gekennzeichnet, dass** die Erfassung einer Pressenstößelposition und/oder die Erfassung des Zustands der Freigabeeinrichtung zumindest zweikanalig erfolgen.

10. Servopresse nach einem der Ansprüche 2 bis 9, **dadurch gekennzeichnet, dass** zumindest Teile der Funktion der Bremsentesteinrichtung, der Freigabeeinrichtung, der Momentenfreischaltung und der Überwachungseinrichtung in einer elektronischen Steuerung (11), insbesondere in einer fehlersicheren elektronischen Steuerung mit zweikanalig aufgeführten Ein- und Ausgängen, zusammengefasst
sind.

## Claims

1. Method for the protection of persons during their work on an electrically driven servopress (1), a hazardous region (6) of the servopress (1) being safeguarded by means of a structural protection device (5) surrounding the said servopress and having a lockable access facility (7), and there being provided for the servopress (1) a holding brake (8) which is designed for braking a press ram (2), and kinetic energy of the press ram (2), in the case of a manual setting-up operation, a requirement to enter the hazardous region (6) being interrogated, the functioning of the holding brake (8) being tested, and the access facility (7) being enabled in the case of a positive holding-brake test, **characterized in that**, after the enabling of the access facility (7), the ram speed (vS) of the press ram (2) is monitored with regard to a maximum permissible speed (vMax) for the setting-up operation, and, if the ram speed (vS) is overshot, the drive (4) then being cleared and subsequently the holding brake (8) being activated in order to brake the press ram (2).

2. Servopress having a person protection arrangement, the servopress having a press ram (2), an electric motor (3) for driving the press ram (2), an electric drive (4) for feeding the electric motor (3) on the basis of a stipulated drive desired value, a structural protection device (5) surrounding the servopress and having a lockable access facility (7) for persons in order to safeguard a hazardous region (6) of the servopress, and a brake-testing device for testing the holding brake (8) with regard to a requirement to enter the hazardous region (6), and a holding brake (8) designed for braking the mass of the press ram (2), and kinetic energy of the press ram (2), **characterized by**
- an enabling device for enabling the access facility (7) in the case of a positive holding-brake test,
- instantaneous clearance for clearing the electric drive (4), and
- a monitoring device for monitoring a ram speed (vS) with regard to the overshooting of a permissible speed (vMax) and for activating the instantaneous clearance and for subsequently activating the holding brake (8) if, with the access facility (7) enabled, the permissible speed (vMax) is overshot.

3. Servopress according to Claim 2, **characterized in that** the maximum permissible speed (vMax) is related to a reduced setting-up speed for setting-up work on the servopress, with the access facility (7) enabled.

4. Servopress according to Claim 2 or 3, **characterized in that** the instantaneous clearance is implemented via a first and a second cut-off path in the drive (4).

5. Servopress according to Claim 4, **characterized in that** the instantaneous clearance for clearing the electric drive (4) is additionally implemented via a motor contactor (13) as a third cut-off path for isolating the electric drive (4) from a power supply.

6. Servopress according to one of Claims 2 to 5, **characterized in that** the brake-testing device has means for approaching an end position of the press ram (2) in response to a requirement to enter the hazardous region (6), means for activating the holding brake (8), means for locking on a drive-test desired value (TM), means for detecting the ram position of the press ram (2), and means for activating the instantaneous clearance, if a variation in the ram position, with the drive (4) locked on, can be detected.

7. Servopress according to Claim 6, **characterized in that** the brake-testing device has means for detecting a motor current, and **in that** the instantaneous clearance can be activated if, with the drive (4) locked on, no motor current can be detected.

8. Servopress according to one of Claims 2 to 7, **characterized in that** the instantaneous clearance for clearing the electric drive (4) has a safety stage at least of category 4 according to the standard DIN EN 954.

9. Servopress according to one of Claims 2 to 8, **characterized in that** the detection of a press-ram position and/or the detection of the state of the enabling device take/takes place at least in a two-channel manner.

10. Servopress according to one of Claims 2 to 9, **characterized in that** at least parts of the function of the brake-testing device, of the enabling device, of the instantaneous clearance and of the monitoring device are combined in an electronic control (11), in particular in a failsafe electronic control with inputs and outputs of two-channel type.

## Revendications

1. Procédé de protection des personnes lorsqu'elles travaillent sur une servopresse (1) entraînée électriquement, une zone (6) de danger de la servopresse (1) étant rendue sûre au moyen d'un dispositif (5) architectural de protection qui l'entoure et qui a une possibilité d'accès verrouillable et dans lequel il est prévu un frein (8) d'arrêt de la servopresse (1), qui est conçu pour freiner un coulisseau (2) de presse plus une énergie cinétique du coulisseau (2) de presse lors d'un fonctionnement manuel de réglage, dans lequel on demande à entrer dans la zone (6) de danger, on teste le fonctionnement du frein (8) d'arrêt et on valide la possibilité (7) d'accès si le test du frein d'arrêt est positif, **caractérisé en ce qu'**après la validation de la possibilité (7) d'accès, on contrôle la vitesse (vS) du coulisseau (2) de presse jusqu'à une vitesse (vMax) maximum admissible pour le fonctionnement de réglage, et si la vitesse (vS) du coulisseau est dépassée, on déconnecte l'entraînement (4) et ensuite on commande le frein (8) d'arrêt pour freiner le coulisseau (2) de la presse.

2. Servopresse ayant un dispositif de protection des personnes, la servopresse comportant un coulisseau (2) de presse, un moteur (3) électrique pour entraîner le coulisseau (2) de la presse, un entraînement (4) électrique pour alimenter le moteur (3) électrique sur la base d'une valeur de consigne d'entraînement prescrite, un dispositif (5) architectural de protection entourant la servopresse et ayant une possibilité d'accès verrouillable des personnes pour rendre sûre une zone (6) de danger de la servopresse, ainsi qu'un dispositif de test de freinage pour tester le frein (8) d'arrêt sur demande d'entrée dans la zone (6) de danger, un frein (8) d'arrêt conçu pour freiner la masse du coulisseau (2) de la presse plus une énergie cinétique du coulisseau (2) de la presse, **caractérisée par**
- un dispositif de validation pour valider la possibilité (7) d'accès si le test du frein d'arrêt est positif,
- une déconnexion instantanée pour déconnecter l'entraînement (4) électrique et,
- un dispositif de contrôle d'une vitesse (vS) du coulisseau pour savoir si une vitesse (vMax) admissible est dépassée ainsi que pour commander la déconnexion instantanée et pour commander ensuite le frein (8) d'arrêt, si, alors que la possibilité (7) d'accès est validée, la vitesse (vMax) admissible est dépassée.

3. Servopresse suivant la revendication 2, **caractérisée en ce que** la vitesse (vMax) maximum admissible est rapportée à une vitesse réduite de réglage pour des travaux de réglage sur la servopresse alors que la possibilité (7) d'accès est validée.

4. Servopresse suivant la revendication 2 ou 3, **caractérisée en ce que** la déconnexion instantanée est réalisée par un premier et un deuxième trajets de mise hors circuit de l'entraînement (4).

5. Servopresse suivant l'une des revendications 4, **caractérisée en ce que** la déconnexion instantanée pour la déconnexion de l'entraînement (4) électrique est réalisée supplémentairement par un contacteur (13) de moteur, comme troisième trajet de mise hors circuit, pour séparer l'entraînement (4) électrique d'une alimentation en énergie.

6. Servopresse suivant l'une des revendications 2 à 5, **caractérisée en ce que** le dispositif de test de frein comporte des moyens pour aller à une position d'extrémité du coulisseau (2) de la presse sur demande d'entrée dans la zone (6) de danger, des moyens de commande du frein (8) d'arrêt, des moyens d'établissement d'une valeur (TM) de consigne de test d'entraînement, des moyens de détection de la position du coulisseau (2) de la presse et des moyens de commande de la déconnexion instantanée si une modification de la position du coulisseau est détectée alors que l'entraînement (4) est établie.

7. Servopresse suivant la revendication 6, **caractérisée en ce que** le dispositif de test de frein comporte des moyens de détection d'un courant de moteur et **en ce que** la déconnexion instantanée peut être commandée, si l'on ne peut pas détecter de courant de moteur alors que l'entraînement (4) est établi.

8. Servopresse suivant l'une des revendications 2 à 7, **caractérisée en ce que** la déconnexion instantanée comporte, pour la déconnexion de l'entraînement (4) électrique, un étage de sécurité au moins de la catégorie (4) suivant la norme DIN EN 954.

9. Servopresse suivant l'une des revendications 2 à 8, **caractérisée en ce que** la détection d'une position du coulisseau de la presse et/ou la détection de l'état du dispositif de validation s'effectue au moins par deux canaux.

10. Servopresse suivant l'une des revendications 2 à 9, **caractérisée en ce qu'**au moins des parties de la fonction du dispositif de test de frein, du dispositif de validation, de la déconnexion instantanée et du dispositif de contrôle sont rassemblés dans une commande (11) électronique, notamment dans une commande électronique anti-panne ayant des entrées et des sorties réalisées en deux canaux.
